# DEMANDE DE BREVET EUROPEEN

(11) **EP 0 674 287 A1**
(43) Date de publication de la demande: **27.09.1995**
(21) Numéro de dépôt: 95400413.1
(22) Date de dépôt: 27.02.1995
(51) Int. Cl.: G06K 7/06

(54) **Boîtier pour lecteur de carte à microcircuit**

(30) Priorité: 21.03.1994 FR 9403266
(71) Demandeur: FRAMATOME CONNECTORS INTERNATIONAL, 92400 Courbevoie, Paris (FR)
(72) Inventeur: Pernet, Michel, F-25300 Pontarlier (FR)
(74) Mandataire: Lepercque, Jean

(57) **Abrégé**

L'invention concerne un boîtier pour lecteur de carte à microcircuit comprenant un corps de boîtier (1), un circuit électronique solidaire du corps de boîtier (1), un dispositif de guidage et de maintien de la carte et un connecteur présentant des lames élastiques assurant une connexion électrique entre des éléments conducteurs de la carte et ledit circuit électronique, caractérisé en ce qu'il comporte au moins un élément élastique (13, 55) d'appui de la carte par une force élastique.

## Description

La présente invention a pour objet un boîtier pour lecteur de carte à microcircuit, comprenant un corps de boîtier, un circuit électronique solidaire du corps de boîtier, un dispositif de guidage et de maintien de la carte et un connecteur présentant des laines élastiques assurant une connexion électrique entre des éléments conducteurs de la carte et ledit circuit électronique.

De tels boîtiers de lecteur de carte peuvent être utilisés en particulier pour des installations dites "péage main libre". De tels produits incluent un dispositif électronique d'échange de données à distance infrarouge ou HF, une carte à microcircuit interchangeable permettant l'identification du porteur ou servant à un prépayement, l'ensemble s'inscrivant dans un format qui est de peu supérieur à celui de la carte, en particulier le format PCM CIA.

Dans un tel boîtier, la carte doit être maintenue en place et sa position par rapport aux contacts du connecteur doit être assez précisément définie. En outre, elle ne doit pas risquer de glisser hors du boîtier. Un tel boîtier présente en général des batteries d'alimentation du circuit électronique, celles-ci devant alors être facilement remplaçables, tout en étant maintenues et protégées dans leur logement.

Un tel boîtier doit assurer en premier lieu la liaison électrique entre le connecteur pour carte à microcircuit et le circuit électronique ainsi qu'un positionnement correct des contacts du connecteur sur les plages de contact de la carte, ceux-ci étant dans le plan de la carte.

En outre la pression de contact entre les lames de contact et la carte doit se situer dans les limites requises. En effet, si cette pression est trop faible, la résistance du contact est trop élevée et si par contre elle est trop grande, il y a usure des contacts et une force d'insertion de la carte qui est trop élevée. Pour cela il faut donc assurer également un bon positionnement relatif de la carte par rapport aux laines contact du connecteur également dans le sens dit vertical, c'est-à-dire dans le sens perpendiculaire au plan de la carte.

Dans les boîtiers de type connu, le connecteur pour carte à microcircuit est positionné et soudé sur le circuit électronique, le positionnement étant assuré par les pattes de sortie des contacts, soudées à plat sur la face inférieure du circuit. Le circuit électronique est lui-même fixé sur le corps de boîtier et le capot guide-carte est fixé lui-même sur le boîtier. Dans cette configuration, les positionnements horizontaux et verticaux de la carte sont assurés par le capot.

La précision du positionnement vertical est donc conditionnée par le cumul de la distance des lames de contact du connecteur à la surface d'appui du connecteur sur le circuit, de l'écart de planéité du circuit, de la distance entre les appuis du circuit et du capot et enfin de la précision du capot (distance entre les faces d'appui sur le corps de boîtier et sur la carte). Cet empilement de cotes tend à une dispersion mécanique non négligeable entre les boîtiers ce qui nuit à la fiabilité.

Selon un premier aspect, la présente invention a pour objet un boîtier pour lecteur de carte à microcircuit ne présentant pas l'inconvénient précité.

L'invention concerne ainsi un boîtier pour lecteur de carte à microcircuit, comprenant un corps de boîtier, un circuit électronique solidaire du corps de boîtier, un dispositif de guidage et de maintien de la carte et un connecteur présentant des lames élastiques assurant une connexion électrique entre des éléments conducteurs de la carte et ledit circuit électronique, caractérisé en ce que le connecteur est fixé directement sur le corps de boîtier.

On évite ainsi un empilement de cotes et on assure une bonne fiabilité du boîtier.

Le connecteur est avantageusement intégré au corps de boîtier, ladite fixation étant obtenue par surmoulage des lames élastiques dans le corps du boîtier.

Selon un deuxième aspect, l'invention a pour objet un boîtier pour lecteur de carte à microcircuit comprenant un corps de boîtier, un circuit électronique solidaire du corps de boîtier, un dispositif de guidage et de maintien de la carte et un connecteur présentant des lames élastiques assurant une connexion électrique entre des éléments conducteurs de la carte et ledit circuit électronique, caractérisé en ce qu'il comporte un élément élastique d'appui de la carte par une force élastique.

Selon une variante avantageuse, le boîtier selon l'invention comporte un couvercle monté sur le corps de boîtier et définissant un espace d'introduction de la carte et, dans une région d'introduction de la carte, le corps de boîtier présente un logement d'un dispositif d'alimentation électrique, ce logement présentant un capot, le capot étant maintenu élastiquement par des moyens élastiques, d'une part en une position non fermée en l'absence de carte et d'autre part en une position fermée en présence de carte en exerçant sur celle-ci une dite force élastique plaquant une région arrière de celle-ci sur une face interne du couvercle.

Ceci permet d'appuyer la carte contre le côté opposé de la fente sans opposer une résistance exagérée à l'introduction.

Selon ladite variante de l'invention, le logement de la batterie est placé du côté de la fente d'introduction et le couvercle de logement constitue l'un des côtés de la fente d'introduction et c'est ce couvercle qui exerce la fonction précédemment remplie par le rouleau élastique de la technique préexistante. En d'autres termes, selon l'invention le même élément élastique sert à ouvrir le logement des batteries lors du changement de celles-ci et à réaliser ladite fonction d'appui de la carte.

La face interne du couvercle présente avantageusement un bord d'introduction pourvu d'un bécquet de retenue de la carte. Le boîtier comporte avantageusement au moins une batterie disposée dans le logement.

Lesdits moyens élastiques peuvent être des lames de ressort disposées dans le capot, ces lames de ressort pouvant former une connexion électrique en série des batteries.

Dans un mode de réalisation préféré, le capot, dans la position non fermée, vient en butée contre ladite face interne du couvercle. Le capot peut alors présenter un bord d'entrée recourbé, et, dans la position non fermée, le bord recourbé présente une extrémité qui reste disposée dans un logement du corps de boîtier.

D'autres caractéristiques et avantages de l'invention apparaîtront mieux à la lecture de la description qui va suivre, donnée à titre d'exemple non limitatif, en liaison avec les dessins qui représentent :
- la figure 1 une vue de dessous en perspective d'un boîtier selon un mode de réalisation préféré de l'invention ;
- la figure 2 une vue de dessus en perspective d'un dispositif selon l'invention, en position de changement de batteries ;
- la figure 3 une vue de dessus éclatée d'un boîtier selon un mode de réalisation préféré de l'invention ;
- la figure 4 une vue en perspective d'un boîtier selon l'invention ;
- les figures 5a et 5b respectivement une coupe longitudinale d'un boîtier selon l'invention, la figure 5b est un agrandissement de l'extrémité d'introduction de la carte ;
- la figure 6 un détail vu de dessous du couvercle d'un boîtier selon l'invention.

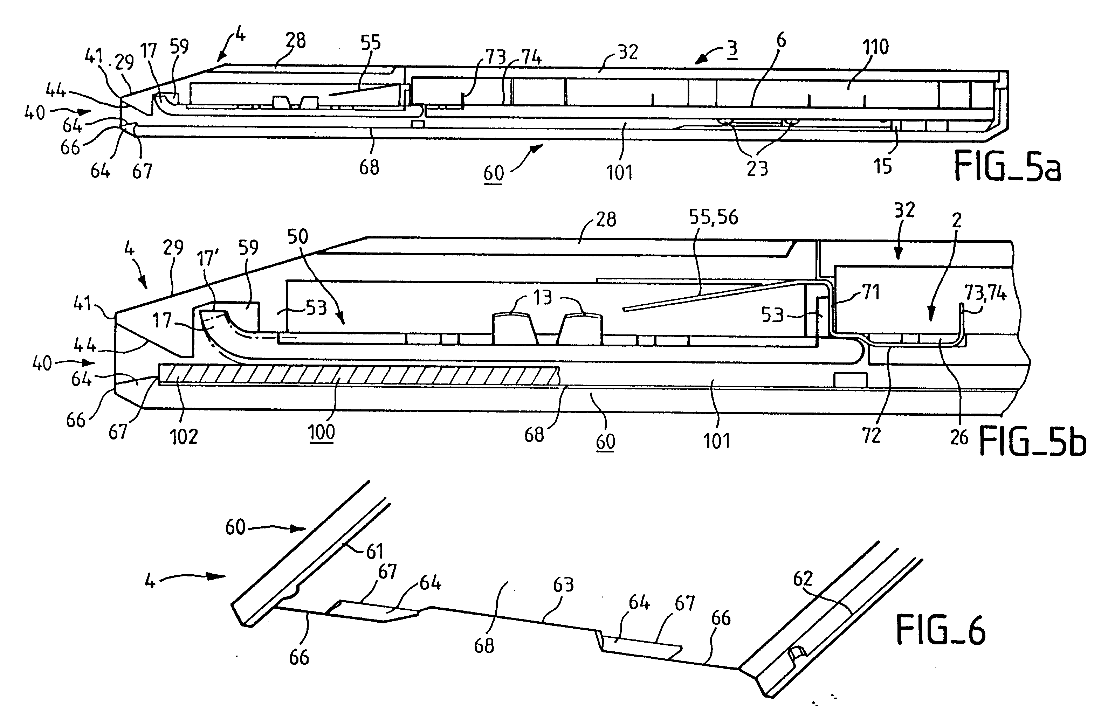

Sur les figures, un boîtier pour lecteur de carte présente corps de boîtier désigné par le repère général 1, celui-ci présentant sur sa face inférieure un logement 2 présentant un fond 6 dans lequel est logé un connecteur 22 présentant des lames de contact 23 en contact électrique avec les métallisations d'un circuit électronique 11a qui est logé dans le logement 2 (voir figure 5a), et des lames ressorts 25 destinées à venir en contact mécanique et électrique avec des régions de contact de la carte. Le connecteur 22 peut également présenter un contact 24 de fin de course de la carte 100.

Selon l'invention, le connecteur 22 est soit monté dans le corps de boîtier 2, soit réalisé par surmoulage lors de la fabrication de celui-ci.

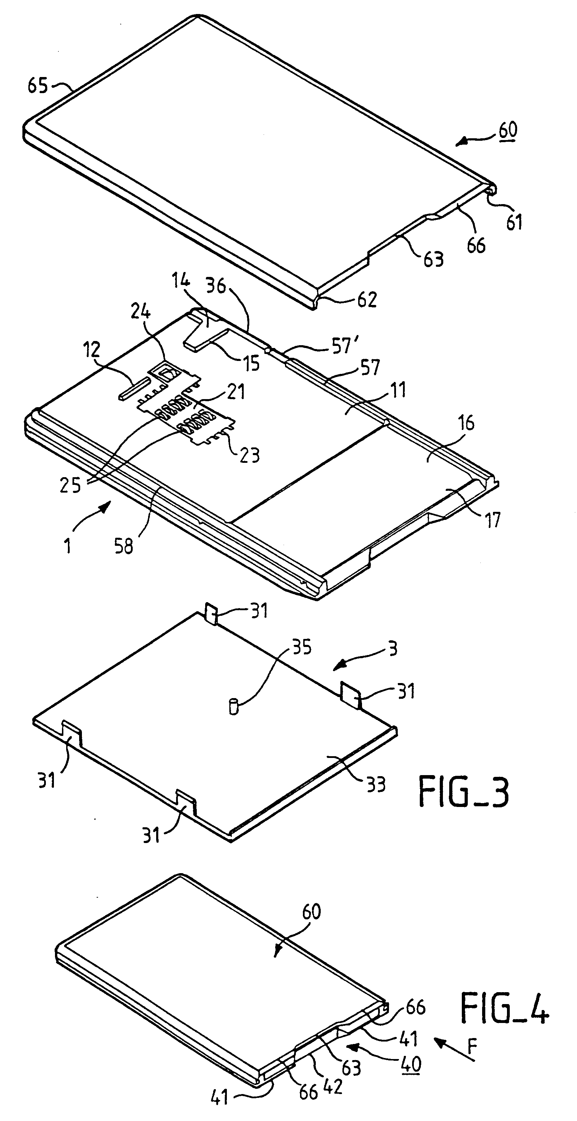

En vue de dessus (voir figure 3), le connecteur 22 présente des lames ressorts 25 destinées à venir en contact électrique avec les métallisations d'une carte à microcircuit 100 introduite dans un logement de carte 101. Ce logement de carte 101 est défini dans sa partie inférieure par le plan supérieur 11 du corps de boîtier délimité de chaque côté par les glissières 57 et 58, et par un capot rabattable 16 d'un logement 50 destiné à recevoir des piles ou batteries 90 disposées dans des logements circulaires 51 et 52 délimités par des régions de bord 53 et 54. On remarquera que les glissières 57 et 58 longent également le couvercle 16 et le logement 50. Le logement de carte 101 est délimité à sa partie supérieure par la face inférieure 68 d'un couvercle 60 présentant de chaque côté des glissières 61 et 62 complémentaires des glissières 57 et 58 du corps de boîtier 1.

Le logement 101 présente une fente d'introduction 40.

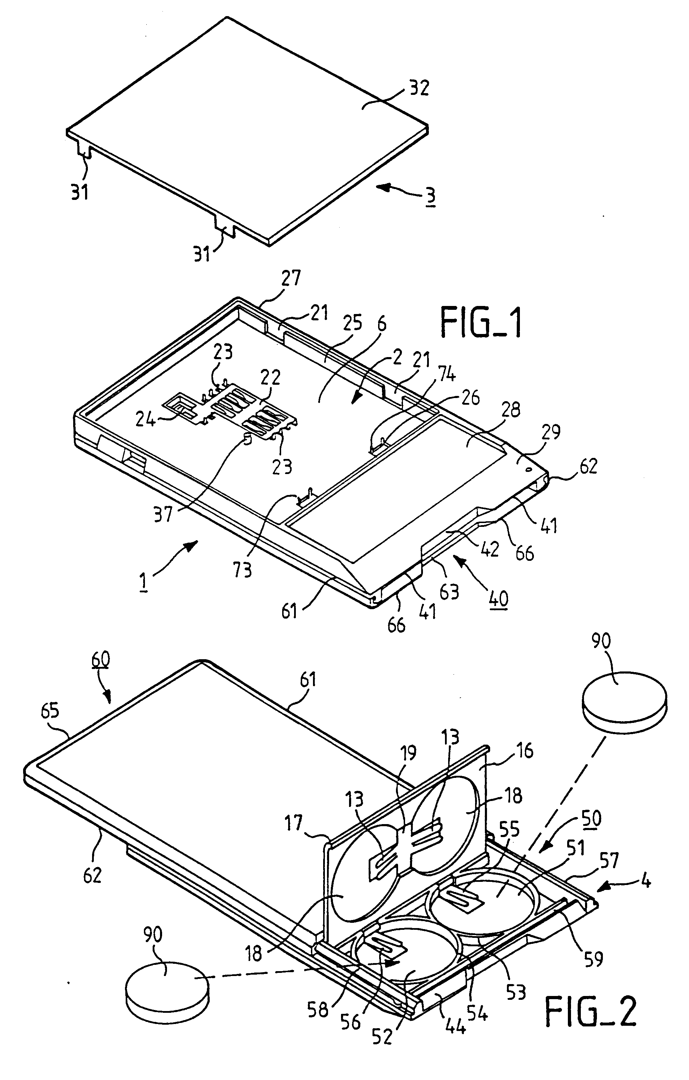

La figure 4 montre le boîtier en position montée dans lequel le couvercle 60 a été entièrement repoussé de manière à dissimuler et à recouvrir le logement 50 des batteries, alors qu'à la figure 2, le couvercle 60, une fois reculé partiellement le long des glissières 57, 58 dégage le capot 16 qui peut ainsi être ouvert, ce qui permet de changer les piles ou batteries 90.

On remarquera également à la figure 3 une butée 12 de fin de course de la carte ainsi qu'une pièce coulissante 14 qui vient se positionner dans une région ajourée 57' dans la glissière 57 pour former une butée latérale de la carte. La pièce coulissante 14 présente une région de butée 15. Elle coulisse dans la région ajourée 57' dans laquelle la glissière 57 s'interrompt. Ce coulissement est obtenu par action du doigt de l'utilisateur sur le bord 36, accessible depuis l'extérieur, de la pièce 14. Ceci permet de dégager la carte 100 du logement 10'.

Un logement 2 dans lequel a été disposé le circuit 110 est refermé par un capot amovible 3 présentant des pattes latérales 31 ici au nombre de quatre qui s'engagent dans autant de logements correspondants 21 d'un rebord 25 entourant un rebord 25 disposé à l'intérieur d'un contour externe 27 du logement 2. Le capot 3 présente également sur sa face inférieure 33 un pion 35 qui vient appuyer sur un pion complémentaire 37 disposé dans la partie centrale du fond 6.

Le capot 16 présente sur sa face inférieure 18 un élément conducteur présentant une patte centrale 19 et de chaque côté deux lames ressorts 13 venant appuyer chacune sur une électrode des piles 90 formant ainsi une connexion série entre celles-ci. Les logements de piles 51 et 52 présentent à leur face interne un élément élastique à deux lames ressorts respectivement 55 et 56 venant en contact électrique avec l'autre électrode des piles 90.

Comme le montre la figure 5b, ces paires de lames ressorts 55, 56 sont en contact électrique avec des pattes d'alimentation 73 et 74 du circuit électronique 110.

Lorsque des piles de batteries standard sont disposées dans les logements 51 et 52, le capot 16 rabattu ne se referme pas entièrement et il subsiste une force élastique qui repousse le capot 16 contre la face inférieure 68 du couvercle 60. Le capot 16 présente dans la région d'introduction 4 de la carte 100, une région recourbée vers le bas 17 qui sert de profil d'introduction à la carte 100 ce qui fait que, lors de l'introduction de la carte 100, le capot 16 est repoussé vers le bas par la carte et referme le logement 50. Lorsque la carte est introduite à fond de manière à ce que son extrémité aval vient en butée contre la butée 12, 14, le bord arrière 102 de la carte vienne s'engager dans le bord vertical 67 des bécquets 64 dont est pourvu le bord inférieur du couvercle 60 dans la région d'introduction 4 de la carte 100. (voir figure 6). On remarquera en outre, que le bord amont 66 du couvercle 60 présente dans une région centrale une échancrure 63 sensiblement perpendiculaire à la direction d'introduction F de la carte 100, et qui s'étend au-delà des rebords verticaux 67 des bécquets 64 situés de part et d'autre de l'échancrure 63.

En outre, une échancrure 42 est située en vis-à-vis de l'échancrure 63 de la partie centrale du bord amont 41 du corps de boîtier 2. De cette façon, l'utilisateur d'une carte 100 peut, en appuyant celle-ci vers le bas la dégager du boîtier pour la retirer, en coopération éventuelle avec la pièce coulissante 14.

La région courbée 17 vient se loger dans un logement 59 du corps de boîtier situé en aval de la région d'introduction chanfreinée 44.

Lorsque la carte 100 est hors du boîtier, l'effet conjugué des ressorts des lames élastiques 13, 55 et 56 a pour effet de repousser le capot 16 vers le haut du boîtier de telle sorte qu'il vienne en contact mécanique avec la face inférieure 68 du couvercle 60. La courbure du bord avant 17 du capot 16 est de préférence suffisante pour protéger les batteries lorsqu'il est en butée contre le couvercle du boîtier en cas d'absence de carte. Il suffit pour cela que la longueur de la partie recourbée 17 soit suffisante que, dans ce cas, son extrémité 17' reste dans le logement 59. On obtient ainsi un certain niveau d'étanchéité au niveau de la fente d'introduction 40 de la carte, notamment une étanchéité aux poussières.

En se reportant plus particulièrement aux figures 1 et 3, on remarquera que le connecteur 22 est positionné et fixé sur le corps de boîtier 1 par exemple par soudure ultrasons ou par surmoulage direct. Le circuit électronique 110 (voir figure 5a) est fixé d'une part au corps de boîtier et reçoit d'autre part les pattes 23 des lames de contact du connecteur 22. Les pattes sont soit soudées en surface dans le circuit électronique 110 soit introduites dans des trous de ce circuit pour soudure ou emmanchement à force. Le positionnement horizontal du circuit sur le corps du boîtier doit être suffisamment précis pour permettre le positionnement sans difficulté de ces pattes.

Le positionnement vertical de la carte est assuré par le capot 60. Le positionnement horizontal de la carte est assuré par le corps de boîtier 1.

La précision du positionnement vertical est donc donnée par le cumul de :
- a) la distance des lames de contact à la surface d'appui du connecteur sur le corps de boîtier ;
- b) sur le corps de boîtier, la distance entre les appuis du connecteur et du capot ;
- c) la précision du capot (distance entre les faces d'appui sur le corps de boîtier sur la carte).

Par rapport à la solution de l'art antérieur une pièce (circuit électronique 110) a été éliminée dans la chaîne de côtes relative au positionnement vertical des lames contact 25 par rapport à la carte 100.

Le bon fonctionnement de l'ensemble carte/connecteur ne dépend ainsi plus de la précision mécanique d'un ensemble circuit/connecteur, ce qui facilite la réalisation du circuit électronique et de la partie mécanique.

## Revendications

**1 -** Boîtier pour lecteur de carte à microcircuit comprenant un corps de boîtier, un circuit électronique solidaire du corps de boîtier, un dispositif de guidage et de maintien de la carte et un connecteur présentant des lames élastiques assurant une connexion électrique entre des éléments conducteurs de la carte et ledit circuit électronique, caractérisé en ce qu'il comporte au moins un élément élastique (13, 55) d'appui de la carte par une force élastique.

**2 -** Boîtier selon la revendication 1, caractérisé en ce qu'il comporte un couvercle (60) monté sur le corps de boîtier et définissant un espace (101) d'introduction de la carte (100) et en ce que dans une région (4) d'introduction de la carte (100), le corps de boîtier (2) présente un logement (50) d'un dispositif d'alimentation électrique, ce logement (50) présentant un capot (16), le capot (16) étant maintenu élastiquement par au moins un dit élément élastique d'une part en une position non fermée en l'absence de carte (100), et d'autre part en une position fermée en présence de carte (100), en exerçant sur celle-ci (100) une dite force élastique plaquant une région arrière (102) de celle-ci sur une face interne (68) du couvercle (60).

**3 -** Boîtier selon la revendication 2 caractérisé en ce que la face interne (68) du couvercle (60) présente un bord d'introduction (66) pourvu d'un becquet (64, 68) de retenue de la carte (100).

**4 -** Boîtier selon la revendication 2, caractérisé en ce qu'il comporte au moins une batterie (90) disposée dans le logement (50).

**5 -** Boîtier selon les revendications 1 ou 2, caractérisé en ce que lesdits éléments élastiques (13) sont des lames ressort disposées dans ledit capot (16).

**6 -** Boîtier selon la revendication 5, caractérisé en ce que les lames ressorts (13) sont disposées de manière à former une connexion électrique en service des batteries (90).

**7 -** Boîtier selon une des revendications 2 à 6 caractérisé en ce que, dans la position non fermée, le capot (16) vient en butée contre ladite face interne (68) du couvercle (60).

**8 -** Boîtier selon la revendication 7, caractérisé en ce que le capot (16) présente un bord d'entrée recourbé (17) et en ce que, dans ladite position non fermée, une extrémité (17') du bord recourbé (17) reste disposée dans un logement (59) du corps de boîtier (2).
